# NEUE EUROPÄISCHE PATENTSCHRIFT

(11) **EP 0 248 980 B2**
(45) Veröffentlichungstag und Bekanntmachung des Hinweises auf die Entscheidung über den Einspruch: **05.04.1995**
(45) Hinweis auf die Patenterteilung: 14.10.1992
(21) Anmeldenummer: 87103043.3
(22) Anmeldetag: 04.03.1987
(51) Int. Cl.: B24D 3/28, F16D 69/02, C04B 35/03

(54) **Hochtemperaturbeständige Formstoffe**
High temperature-resistant moulding material
Matériau de moulage résistant aux hautes températures

(30) Priorität: 13.06.1986 DE 3619541; 20.02.1987 DE 3705540
(43) Veröffentlichungstag der Anmeldung: 16.12.1987
(73) Patentinhaber: RÜTGERSWERKE AKTIENGESELLSCHAFT, 60326 Frankfurt (DE)
(72) Erfinder: Gardziella, Arno, Dr., D-5810 Witten-Rüdinghausen (DE); Schwieger, Karl-Heinz, Dr., D-5860 Iserlohn (DE); Adolphs, Peter, Dr., D-5750 Menden-Halingen (DE); Suren, Josef, D-4798 Wünnenberg-Haaren (DE)

(56) Entgegenhaltungen:
- EP-A- 0 034 898
- EP-A- 0 211 316
- US-A- 4 101 500
- US-A- 4 395 498
- SPRECHSAAL/INT. CERAMICS AND GLASS MAGAZINE, Band 121, Nr. 102 Seiten 945-947, Coburg, DE; A. GARDZIELLA et al.: "Selection criteria for phenolic resins as binders and carbon-forming agents in refractory products"
- A. GARDZIELLA u. K.-H. SCHWIEGER, Fachberichte Hüttenpraxis und Metallverarbeitung, Bd. 22, No. 6 (1984), 566-590

## Beschreibung

Die Erfindung betrifft hochtemperaturbeständige Formstoffe wie feuerfeste Erzeugnisse, Kohlenstoffwerkstoffe, Schleifkörper und Reibbeläge auf Basis eines kohlenstoffbildenden Bindemittels, Füll-und Zusatzstoffen.

Feuerfeste Erzeugnisse können nach ihrer chemischen Zusammensetzung, ihrer Form sowie nach Herstellungsverfahren unterschieden werden. Nach der ISO-Norm 1109/78 unterteilt man die feuerfesten Erzeugnisse chemisch in tonerdereiche Erzeugnisse, Schamotteerzeugnisse, Tondinas-Erzeugnisse, Silica-Erzeugnisse, basische Erzeugnisse und Sondererzeugnisse, z. B. Kohlenstoffwerkstoffe, Zirkonsilikat, Nitride, Borde, Spinelle. Zu ihrer weiteren Unterteilung werden feuerfeste Baustoffe als geformte, z. B. Steine, oder ungeformte Produkte, z. B. Mörtel, Stampfmassen, Spritzmassen, unterschieden.

Die ISO-Norm 2246 beschreibt eine Unterscheidung nach Herstellungsverfahren, denen Bindungsarten zugeordnet sind. Bei Temperaturen unterhalb 150 °C können z. B. Ton, Wasserglas, Zement oder organische Binder wie Melasse, Ligninsulfonat, Teer und Pech oder synthetische Harze als Bindemittel verwendet werden. Die Bindung für Produkte, die bei 150 - 800 °C wärmebehandelt werden, kann ebenfalls anorganisch-chemisch (Phosphate, Sulfate), hydraulisch (Zement) oder organisch kohlenstoffbildend (z. B. Teer, Pech, synthetisches Harz) erfolgen.

Während man früher im Bereich kohlenstoffbildender Bindemittel, z. B. zur Erzielung einer besonders guten Verschlackungsbeständigkeit, hauptsächlich Teere bzw. Peche als Ausgangsmaterial für eine gute Kohlenstoffbindung verwendet hat, richtet sich zur weiteren Qualitätsverbesserung und besonders auch aus Gründen der Umweltbelastung die Aufmerksamkeit auf die mögliche Verwendung härtbarer synthetischer Harze, im speziellen Furan- oder Phenolharze als neue Rohstoffe.

Besonders vorteilhaft sind dabei Novolake, die gemäß US-A-4,248,638 oder EP-A-164 139 in Lösemitteln gelöst eingesetzt werden.

Daneben nied aus A.Gardziella u.K.-H. Schwieger, Fachberichte Hültenpraxis Metallweiterverarbeitung, Bol.22, No.6, S.566 ff, (1984) allgemein Novolake als Bindemittel für Feuerfest erzeugnisse bekannt, welche bei einem underen Verhältnis von Phenol u. Formaldehyd zur. 1 : 0,7 u. 1.: 0,9 hergestellt erhalten werden. Trotz Verwendung hochsiedender Lösemittel verbleibt der Nachteil der Zündempfindlichkeit bei hohen Temperaturen, sowie die niedrige Kohlenstoffausbeute. In JP-A-79.161611 (C.A. 92: 219825 f) wird daher ein lösemittelfreier, modifizierter Novolak empfohlen. Dieses flüssige Harz ist jedoch aufwendig herzustellen und seine Verwendung somit unwirtschaftlich.

Die Herstellung heißgepreßter Schleifscheiben erfolgt bisher unter Verwendung von Furfurol oder anderen flüssigen Substanzen als Schleifkorn-Benetzungsmittel, welche nur unvollständig in der Lage sind, den hohen Füllstoffanteil, welcher aus Schleifkorn gebunden werden soll, aufzunehmen und liefert deshalb sehr stark staubende und instabile Formstoffmischungen. Gesucht werden Möglichkeiten, stabile, lagerfähige Formstoffmischungen als Granulate herzustellen.

Die Herstellung von Reibbelagsmischungen erfolgt entweder nach einem Trockenmischvenfahren durch Einmischen von pulverförmigen Bindemitteln in ein Füllstoff-Fasergemisch oder durch Naßaufbereitung unter Verwendung von wäßrigen Flüssigharzen oder lösemittelhaltigen Harzlösungen mit anschließender Trocknung. Unzureichend ist in vielen Fällen, insbesondere bei Verarbeitung asbestfreier Belagsmischungen, eine ausreichende Faser- und Füllstoffbenetzung und -haftung. Außerdem treten starke Staubprobleme beim Trockenmischverfahren auf.

Es ist daher Aufgabe der Erfindung, hochtemperaturbeständige Formstoffe bereitzustellen, die qualitativ hochwertige, aber dennoch wirtschaftliche, kohlenstoffbildende Bindemittel enthalten, die aber lösemittelfrei sind.

Die Aufgabe wird gelöst durch hochtemperaturbeständige Formstoffe gemäß den Ansprüchen 1 bis 9.

Für den Fachmann liegt das molare Verhältnis von Phenol zu Formaldehyd bei Novolaken im Bereich von 1 : (0,75 - 0,85) (Knop, Pilato: Phenolic Resins, Springer-Verlag 1985, S. 93).

Insbesondere war man der Meinung, nur Novolake mit einem Phenol-Formaldehyd-Verhältnis von 1 zu mehr als 0,5 seien als Bindemittel sinnvoll, denn einerseits resultieren durch niedrigere Phenol-Formaldehyd-Verhältnisse kleine Moleküle, deren Bindefähigkeit als gering angesehen wurde, andererseits erwartete man bei der Herstellung dieser Bindemittel schlechte Ausbeute und daher eine Unwirtschaflichkeit dieser Harze sowie einen hohen Restgehalt freier Phenole (Vergl. Knop, Pilato, Fig. 3.6 auf S. 49).

Es wurde gefunden, daß Phenol-Novolake mit einem Phenol-Formaldehyd-Verhältnis von 1 : 0,2 bis 1 : 0,35 durchaus wirtschaftlich hergestellt werden können, daß diese Novolake einen Gehalt an freiem Phenol von weniger als 0,5 % enthalten und daß sie überraschenderweise eine gute Bindefähigkeit für Füllmaterialien jeder Art besitzen.

Die hohe Klebekraft der erfindungsgemäß eingesetzten Novolake ist so groß, daß die daraus hergestellten Formstoffe sehr gute Verarbeitungseigenschaften wie z. B. hohe Rieselfähigkeit eines Schleifscheibengranulates oder hohe Grünstandfestigkeit von geformten feuerfesten Erzeugnissen aufweisen.

Es ist ein weiterer Vorteil der erfindungsgemäß verwendeten Bindemittel, daß sie bei der Verkokung eine hohe Kohlenstoffausbeute ergeben. Die erfindungsgemäßen hochtemperaturbeständigen Formstoffe enthalten die Bindemittel und üblichen Füll- und Zusatzstoffe in den üblicherweise eingesetzten Mengen.

Beispiele für Füllstoffe für feuerfeste Erzeugnisse, die einzeln oder kombiniert eingesetzt werden können, sind Sand, Korunde, Bauxite, Zirkoniumerden, Chromite, Magnesite, Dolomite, Boride, aber auch Kohlenstoff wie Ruß, Koks und Graphit.

Füllstoffe für Schleifscheiben sind Korunde und Siliciumcarbid, Zusatzstoffe sind Kryolith, Pyrite, Fluorborate, Zinksulfid, Antomonoxid u. a.

Für Reibbeläge werden als Fasermaterial beispielsweise eingesetzt: Diabasfasern, Basalt-, Keramik-, Aramid-, Glas-, Kohlenstoff- und Metallfasern. Weitere Zuschlagstoffe sind: Ruße, Graphit, Kaolin, Baryth, Metalloxide, Schiefermehl, Sulfide und Metalle in Form von Pulver und Spänen.

Bindemittel sind entweder die reinen Novolakharze mit einem Phenol-Formaldehyd-Verhältnis von 1 : 0,2 bis 1 : 0,35 oder Systeme dieser Harze mit einem Härter wie z. B. Hexamethylentetramin.

Es wurde gefunden, daß durch die Mitverwendung von Härtungsmittel die Kohlenstoffausbeute nach der Verkokung ansteigt.

So ergeben z. B. die erfindungsgemäß in feuerfesten Erzeugnissen eingesetzten Novolake ohne Härter nach dem Verkoken eine Kohlenstoffausbeute von 10 bis 40 Gew.-%.

Analoge feuerfeste Erzeugnisse, die als Bindemittel die erfindungsgemäßen Novolake und die dazu üblicherweise verwendete Härtermenge (1 bis 20 Gew.-%, bevorzugt 8 bis 15 Gew.-% Hexamethylentetramin) enthalten, ergeben nach dem Verkoken eine Kohlenstoffausbeute von etwa 50 bis 70 Gew.-%.

Die erfindungsgemäßen feuerfesten Erzeugnisse können grün eingesetzt werden, z. B. als geformte, nicht gehärtete feuerfeste Steine, die beim ersten Gebrauch bei steigenden Temperaturen bis maximal 2000 °C härten und carbonisieren. Sie können ebenso nach der Formgebung durch thermische Behandlung bei 150 bis 250 °C gehärtet werden, insbesondere wenn Bindemittel verwendet werden, die eine Härterkomponente enthalten.

Vorteilhaft ist ferner die thermische Behandlung vorgeformter, erfindungsgemäßer feuerfester Erzeugnisse bei Temperaturen im Bereich von 800 bis 1000 °C. Die Bindemittel werden dabei carbonisiert. Zurück bleibt ein gefülltes Kohlenstoffgerüst und somit ein inertes, dimensionsstabiles feuerfestes Erzeugnis.

Vorteilhaft bei der Anwendung der erfindungsgemäßen hochtemperaturbeständigen Formstoffe für die Herstellung von heißgepreßten Schleifscheiben ist die Möglichkeit, durch das Warmmischen ein rieselfähiges, staubfreies, lagerstabiles Granulat zu erzeugen, welches durch Heißpressen verarbeitet wird.

Bei der Reibbelagsherstellung können durch Warmmischverfahren unter Verwendung der erfindungsgemäßen hochtemperaturbeständigen Formstoffe die Vorteile der herkömmlichen Reibbelagsmassen-Aufbereitung durch Trockenmischverfahren oder Naßverfahren vereint werden, d. h. hohe Imprägnierfähigkeit der Faserbestandteile und der übrigen Zuschlagsstoffe sowie Lösemittel- und Wasserfreiheit.

Der der Erfindung zugrunde liegende Phenolnovolak wird in an sich bekannter Weise aus einem Phenol und Formaldehyd im molaren Verhältnis von 1 : 0,2 bis 1 : 0,35 in wäßriger, saurer Lösung kondensiert. Als Phenole können ein- oder mehrkernige Phenole oder Gemische der genannten Verbindungsklassen eingesetzt werden, und zwar sowohl ein- als auch mehrkernige Phenole.

Beispiele hierfür sind das Phenol selbst, sowie dessen alkyl-substituierte Homologe, wie o-, m- oder p-Kresol oder höher alkylierte Phenole, außerdem halogensubstituierte Phenole wie Chlor- oder Bromphenol und mehrwertige Phenole wie Resorcin oder Brenzkatechin. Unter den mehrkernigen Phenolen sind vorzugsweise Naphthole, d. h. Verbindungen mit anellierten Ringen, zu verstehen.

Diese Phenole werden mit Formaldehyd oder einer Substanz, die unter den Reaktionsbedingungen Formaldehyd abzuspalten vermag, in saurer, wäßriger Lösung umgesetzt. Produkte dieser Art sind z. B. Formaldehyd selbst bzw. dessen handelsübliche 30- bis 50%ige wäßrige Lösung (Formalin) oder Substanzen, die Formaldehyd in chemisch lockerer Form gebunden enthalten, wie Formaldehydbisulfit, Urotropin, Trioxymethylen oder Paraformaldehyd.

Die dabei erhaltenen Novolakharze sind bei Raumtemperatur fest, beginnen oberhalb 34 °C zu schmelzen und haben bei 70 °C eine Schmelzviskosität zwischen 4 bis 70 Pa . s (bei 60 °C von 8 bis 250 Pa . s). Dadurch ist eine gute Handhabung gewährleistet, andererseits aber auch ohne Verwendung von Lösemitteln eine niedrige Mischtemperatur zur Herstellung der erfindungsgemäßen hochtemperaturbeständigen Formstoffe möglich.
Bereits bei Temperaturen oberhalb 60 °C lassen sich die Füllstoffe mit den beschriebenen Bindemitteln (Harzen oder Harz-Härter-Mischungen) mischen und so die erfindungsgemäßen feuerfesten Erzeugnisse herstellen, die dann geformt und grün eingesetzt oder die nach oder während der Formgebung durch Wärmebehandlung gehärtet werden, eventuell zur Carbonisierung thermisch nachbehandelt werden oder als ungeformte feuerfeste Massen eingesetzt werden.

### Beispiele

### Beispiel 1

94 kg Phenol werden mit 940 g Oxalsäure versetzt und auf ca. 100 °C erhitzt. Unter Rühren und Rückfluß werden über 3 h verteilt 13,3 kg 45%iges Formalin zugegeben. Nach Beendigung der Zugabe wird die Reaktionsmischung bis zu einem freien Formalingehalt < 0,5 % unter Rückfluß erhitzt und danach durch Destillation von leichtsiedenden Bestandteilen (Wasser, Phenol) befreit. Die Kenndaten des resultierenden Harzes wie auch der nachfolgenden Harze zeigt Tabelle 1.

### Beispiel 2

wie Beispiel 1,
mit einem Verhältnis Phenol : Formaldehyd von 1 : 0,25 (94 kg Phenol; 16,7 kg Formalin)

### Beispiel 3

wie Beispiel 1,
mit einem Verhältnis Phenol : Formaldehyd von 1 : 0,3 (94 kg Phenol; 20 kg Formalin)

### Beispiel 4

wie Beispiel 1,
mit einem Verhältnis Phenol : Formaldehyd von 1 : 0,35 (94 kg Phenol; 23,3 kg Formalin)

**Tabelle 1**

| | Beispiel 1 | Beispiel 2 | Beispiel 3 | Beispiel 4 |
|---|---|---|---|---|
| Verhältnis Phenol : Formaldehyd (P : F) | 1:0,2 | 1:0,25 | 1:0,30 | 1:0,35 |
| freies Phenol | 0,1 % | 0,1 % | 0,1 % | 0,1 % |
| Schmelzpunkt | flüssig bei RT | - | - | - |
| n_{D}70 | 1,6167 | 1,6142 | 1,6181 | 1,6219 |
| Mittleres Molekulargewicht | 250 | 280 | 310 | 350 |

| Schmelzviskositäten (mPa.s) | | | | |
|---|---|---|---|---|
| bei 50 °C | 57600 | 123000 | 490000 | - |
| bei 60 °C | 8600 | 24900 | 79000 | 210000 |
| bei 70 °C | 1900 | 4300 | 10800 | 22210 |

### Beispiele 5 bis 8

9500 g einer Mischung aus Magnesit verschiedenster Körnungen und Graphit werden in einem Mischaggregat auf 60 °C aufgeheizt. Danach werden 500 g des ebenfalls auf 60 °C vorgewärmten Phenolnovolaks mit dem Molverhältnis 1 : 0,2 (Beispiel 1) homogen in der Mischung verteilt und anschließend Hexamethylentetramin mit 10 %, bezogen auf das Harz, nachgemischt. Durch die niedrige Mischtemperatur besteht keine Gefahr einer vorzeitigen Härtung im Mischer.

Nach Mischungsende wird die Mischung entweder direkt bei 60 °C verpreßt oder aber man läßt sie abkühlen und bekommt so, bedingt durch den sehr starken Viskositätsanstieg des Harzes, eine rieselfähige Masse, die gut zu verpressen ist.

Nach dem Verpressen zu Formkörpern ergibt sich eine Kaltdruckfestigkeit (KDF) von 88 N/mm².

Die kunstharzgebundenen Formkörper werden danach bis zu einer Temperatur von 180 °C erhitzt und dabei gehärtet und besitzen dann eine solche Festigkeit, daß sie transportiert und in das entsprechende Aggregat im Stahlwerk eingebaut werden können.

Die ermittelte Kaltbiegefestigkeit (KBF) bei den gehärteten Formkörpern beträgt 17 N/mm².

Nach dem vorbeschriebenen Schema, allerdings bei unterschiedlichen Mischtemperaturen, werden auch die anderen Novolake aus den Beispielen 2 bis 4 verarbeitet und die Werte ermittelt.

Die Ergebnisse sind in der folgenden Tabelle 2 enthalten.

**Tabelle 2**

| Beispiel Nr. | Novolak Molverhältnis P : F | Mischtemperatur | KDF vor Härtung | KBF nach Härtung |
|---|---|---|---|---|
| 5 | 1:0,2 | 60 °C | 88 N/mm² | 17 N/mm² |
| 6 | 1:0,25 | 65 °C | 88 N/mm² | 18 N/mm² |
| 7 | 1:0,3 | 70 °C | 90 N/mm² | 20 N/mm² |
| 8 | 1:0,35 | 75 °C | 90 N/mm² | 20 N/mm² |

### Beispiel 9

9500 g einer Mischung aus Dolomit verschiedenster Körnungen werden in einem Mischaggregat auf 80 °C aufgeheizt. Danach werden 500 g des ebenfalls auf 80 °C vorgewärmten Novolaks mit dem Molverhältnis 1 : 0,35 (Beispiel 4) homogen in der Mischung verteilt und anschließend 10 % Hexa, bezogen auf das Harz, nachgemischt.

Nach Mischungsende wird die Mischung entweder direkt bei 80 °C verpreßt oder aber man läßt sie abkühlen und bekommt so, bedingt durch den starken Viskositätsanstieg des Harzes, eine rieselfähige Masse, die gut zu verpressen ist.

Nach dem Verpressen zu Formkörpern ergibt sich eine Kaltdruckfestigkeit von 93 N/mm².

Im Anschluß an die Härtung bei 180 °C wird eine Kaltbiegefestigkeit von 22 N/mm² ermittelt.

Durch den Einsatz von reinen Novolaken als Bindemittel für Dolomit-Formkörper nimmt die Hydratationsempfindlichkeit deutlich ab.

So ist ein kunstharzgebundener Dolomit-Stein im Sommer ca. 10 Tage haltbar.

### Beispiel 10

600 g Korund Korn 46 werden auf 140 °C in einem auf 140 °C aufgeheizten Intensivmischer aufgeheizt und mit 26,5 g einer 140 °C heißen Schmelze des Novolaks nach Beispiel 4 intensiv benetzt.

Der Mischvorgang dauert ca. 3 Minuten. Die Mischung wird auf 90 °C abgekühlt und mit einem Gemenge aus 45 g Pulverharz (z. B. SP 223 von Bakelite), 3,5 g Hexa, 9 g Calziumoxid und 37,5 g Kryolith versetzt. Danach wird weitere 30 s bei 90 °C gemischt und die resultierende Schleifscheibenmischung auf Raumtemperatur abgekühlt.

Von der Mischung werden Prüfkörper mit einer Abmessung von 21,4 × 12,2 × 140 mm hergestellt, welche 3 min bei 170 °C heißverpreßt und 2 h bei 180 °C nachgehärtet werden.

Die Biegefestigkeit der gehärteten Prüfkörper liegt bei 93 N/mm².

### Beispiel 11

1 kg eines erfindungsgemäßen Novolaks gemäß Beispiel 3 wird auf ca. 100 °C aufgeheizt und zu einer auf 100 °C aufgeheizten Mischung aus 3 kg Stahlwolle, 1,5 kg Messingspäne, 1 kg Koks, 0,5 kg Graphit, 0,5 kg Polyaramidfaser (2 mm), 1,5 kg Bariumsulfat und 0,7 kg Magnesiumoxid sowie 0,2 kg Aluminiumoxid gegeben und in einem Intensivmischer ca. 5 min intensiv gemischt. Zu dieser Mischung gibt man bei 80 °C 0,2 kg einer 50%igen wäßrigen Hexamethylentetraminlösung und mischt unter Kühlung weitere 3 min. Die abgekühlte Mischung wird zur Herstellung von Reibbelägen verwendet. Der Reibwert, ermittelt an Prüfkörpern, welche 30 s je mm Schichtdicke bei 170 °C verpreßt und 10 h bis 200 °C nachgehärtet werden, liegt bei 0,4.

## Patentansprüche

1. Hochtemperaturbeständige Formstoffe aus kohlenstoffbildendem Bindemittel und üblichen Füllstoffen, **dadurch gekennzeichnet**, daß sie als Bindemittel einen Phenolnovolak enthalten, der bei einem molaren Verhältnis von Phenol zu Formaldehyd von 1:0,2 bis 1:0,35 hergestellt wurde.

2. Hochtemperaturbeständige Formstoffe aus kohlenstoffbildendem Bindemittel und üblichen Füllstoffen, **dadurch gekennzeichnet**, daß sie als Bindemittel einen Phenolnovolak, der bei einem molaren Verhältnis von Phenol zu Formaldehyd von 1:0,2 bis 1:0,35 hergestellt wurde und 1 bis 20 Gew.-% bezogen auf den Novolak, eines Härtners enthalten.

3. Hochtemperaturbeständige Formstoffe nach Anspruch 2, **dadurch gekennzeichnet**, daß der Härter Hexamethylentetramin ist.

4. Hochtemperaturbeständige Formstoffe nach einem der Ansprüche 1 bis 3, **dadurch gekennzeichnet**, daß sie zur Herstellung von feuerfesten Erzeugnissen verwendet werden.

5. Feuerfeste Erzeugnisse nach Anspruch 4, **dadurch gekennzeichnet**, daß sie als Füllstoffe zusätzlich oder allein Koks, Ruß, Graphit oder Pech oder Gemische davon enthalten.

6. Feuerfeste Erzeugnisse nach den Ansprüchen 4 bis 5, **dadurch gekennzeichnet**, daß sie grün eingesetzt werden.

7. Feuerfeste Erzeugnisse nach den Ansprüchen 4 bis 5, **dadurch gekennzeichnet**, daß sie bei 800 bis 1000 °C thermisch behandelt worden sind.

8. Hochtemperaturbeständige Formstoffe nach den Ansprüchen 1 bis 3, **dadurch gekennzeichnet**, daß sie zur Herstellung von Schleifscheiben verwendet werden.

9. Hochtemperaturbeständige Formstoffe nach den Ansprüchen 1 bis 3, **dadurch gekennzeichnet**, daß sie zur Herstellung von Reibbelägen verwendet werden.

## Claims

1. High-temperature-resistant moulding materials of carbon-forming binders and conventional fillers, characterized in that they contain as a binder a phenol novolak, which is produced with a molar ratio of phenol to formaldehyde of 1 : 0,2 to 1 : 0,35.

2. High-temperature-resistant moulding materials of carbon-forming binders and conventional fillers, characterized in that they contain as a binder a phenol novolak, which is produced with a molar ratio of phenol to formaldehyde of 1 : 0,2 to 1 : 0,35 and from 1 to 20 % by weight, relative to the novolak, of a hardener.

3. High-temperature-resistant moulding materials according to claim 2, characterized in that the hardener is hexamethylenetetramine.

4. High-temperature-resistant moulding materials according to one of claims 1 to 3, characterized in that they are used for the preparation of refractory products.

5. Refractory products according to claim 4, characterized in that they additionally or exclusively contain coke, soot, graphite or pitch or mixtures thereof as fillers.

6. Refractory products according to claims 4 to 5, characterized in that they are introduced untreated.

7. Refractory products according to claim 4 to 5, characterized in that they have been thermally treated at between 800 and 1000 °C.

8. High-temperature-resistant moulding materials according to claim 1 to 3, characterized in that they are used for the production of grinding discs.

9. High-temperature-resistant moulding materials according to claims 1 to 3, characterized in that they are used for the production of friction linings.

## Revendications

1. Matériaux de moulage résistant aux hautes températures à partir d'un liant formant carbone et des matières de charge usuelles, caractérisés en ce qu'ils contiennent en tant que liant une novolaque phénolique, fabriquée avec un rapport molaire de phénol à formaldéhyde de 1 : 0,2 à 1 : 0,35.

2. Matériaux de moulage résistant aux hautes températures à partir d'un liant formant carbone et des matières de charge usuelles, caractérisés en ce qu'ils contiennent en tant que liant une novolaque phénolique, fabriquée avec un rapport molaire de phénol à formaldéhyde de 1 : 0,2 à 1 : 0,35 et 1 à 20 % en poids d'un durcisseur par rapport à la novolaque.

3. Matériaux de moulage résistant aux hautes températures selon la revendication 2, caractérisés en ce que le durcisseur est de l'hexaméthylènetétramine.

4. Matériaux de moulage résistant aux hautes températures selon l'une des revendications 1 à 3, caractérisés en ce qu'ils sont utilisés pour la fabrication de produits réfractaires.

5. Produits réfractaires selon la revendication 4, caractérisés en ce qu'en tant que matières de charge, ils contiennent en plus ou uniquement du coke, du noir de carbone, du graphite, du brai ou des mélanges de ceux-ci.

6. Produits réfractaires selon les revendications 4 à 5, caractérisés en ce qu'ils sont utilisés à l'état cru.

7. Produits réfractaires selon les revendications 4 à 5, caractérisés en ce qu'ils ont été traités thermiquement à une température de 800 à 1000 °C.

8. Matériaux de moulage résistant aux hautes températures selon les revendications 1 à 3, caractérisés en ce qu'ils sont utilisés pour la fabrication de disques abrasifs.

9. Matériaux de moulage résistant aux hautes températures selon les revendications 1 à 3, caractérisés en ce qu'ils sont utilisés pour la fabrication de garnitures de friction.
